# EUROPEAN PATENT SPECIFICATION

(11) **EP 2 154 989 B1**
(45) Date of publication and mention of the grant of the patent: **20.11.2013**
(21) Application number: 07722636.3
(22) Date of filing: 31.05.2007
(51) Int. Cl.: A23G 4/14, A23G 4/08

(54) **ENVIRONMENTAL CHEWING GUM**
UMWELTFREUNDLICHER KAUGUMMI
CHEWING-GUM RESPECTUEUX DE L'ENVIRONNEMENT

(43) Date of publication of application: 24.02.2010
(60) Divisional application: 13186837.4
(73) Proprietor: Gumlink A/S, 7100 Vejle (DK)
(72) Inventor: NEERGAARD, Jesper, Denmark (DK)
(74) Representative: Olesen, Kaj
(86) International application number: PCT/DK2007/000259
(87) International publication number: WO 2008/145120

(56) References cited:
- WO-A-2004/028269
- WO-A-2006/016179
- US-A- 2 740 772
- US-A- 3 020 257
- US-A- 3 396 038
- US-A1- 2002 160 077
- US-A1- 2003 157 214
- US-A1- 2006 240 144

## Description

### Technical field

The present invention relates to a chewing gum according to the provisions of claim 1.

### Background

The invention is within the field of chewing gum comprising biodegradable gum base polymers.

A problem relating to such chewing gum is that chewing gum comprising biodegradable polymers under some circumstances may exhibit delayed biodegradation as the chewing gum, when sticking to a surface after chewing, forms a barrier to degradation triggers such as humidity and oxygen, thereby at least delaying the intended biodegradation and thereby release from the surface to which the chewing gum is attached.

WO 2006/016179 discloses a polymeric material having low tack which has a straight or branched chain carbon-carbon polymer backbone and a multiplicity of side chains attached to the backbone.

US 2003/157214 discloses an edible chewing gum base composition comprising grafted polyhydroxy copolymers.

US 3 396 038 discloses a chewing gum comprising i.a. a water-insoluble, graft copolymer of vinyl acetate with a polyoxyalkylene compound.

US 3 020 257 discloses a method for manufacture of polyisobutylene-vinyl acetate graft copolymer.

US 2 740 772 discloses a chewing gum base side chain crystalline copolymer having dual properties of base firmness due to a firm waxy structure at room temperature and viscoelastic properties at body temperature.

WO 2004/028269 discloses a degradable chewing gum polymer polymerized from at least one initiator, at least two monomers and at least one carbonate monomer.

US 2006/240144 discloses a biodegradable chewing gum base comprising a blend of a polypeptide and a miscible derivative thereof, the base having modulated hydrophilicity, adhesive properties, compliance, and elasticity.

US 2002/160077 discloses a chewing gum composition claiming to have new flavor profiles and increased intensity of existing flavor profiles.

WO 2008/104546 discloses a chewing gum base comprising i.a. a polymeric material which has a straight or branched chain carbon-carbon backbone and a multiplicity of side chains.

It is an object of the invention to provide an environmental chewing gum facilitating improved biodegradation and improved low-tack when the chewing gum is at least partly attached to a surface.

### Summary

The present invention relates to an environmental chewing gum composition comprising at least one biodegradable gum base polymer, at least one sweetener and at least one flavor, said composition having low tack effected by a plurality of side chains attached to the backbone of at least one gum base polymer, wherein the backbone of the gum base polymer comprises said biodegradable gum base polymer, wherein the biodegradable gum base polymer is hydrolytically degradable, wherein at least one of the gum base polymers is a graft copolymer, and wherein said graft copolymer comprises a plurality of side chains attached to the backbone wherein the biodegradable polymer is selected from the group consisting of polyesters, polycarbonates, polyesteramides, polyesterurethanes, or any combination thereof.

According to the invention, an environmental chewing gum is a chewing gum with improved properties when left in the environment. According to the invention, an environmental chewing gum is provided in which after-chewing biodegradability and low tack properties are mutually improved.

According to an advantageous embodiment of the invention, improved biodegradation and low-tack properties are facilitated through the employment of both biodegradable gum base polymers and low tack provided by a plurality of side chains attached to the backbone of a gum base polymer of the chewing gum. This improved biodegradation and the obtained low-tack property may be obtained due to the fact that improved low-tack properties facilitate an increased access of biodegradation triggers, such as humidity and oxygen to the chewing gum surface of a chewing gum deposited on a surface. The increased access of biodegradation triggers is facilitated as the contact area between the environment and the biodegradable polymers is increased due to the low-tack property. This reaction will moreover become the start of a desirable self-enhancing effect as increased degradation of the biodegradable polymers of the chewing gum again will result in a gradual release from the surface thereby invoking further attractive low-tack properties.

Thus, according to an embodiment of the invention, an attractive synergy between biodegradable polymers in chewing gum and low-tack property invoked by a plurality of side chains attached to the backbone of at least one gum base polymer may be obtained.

A particular advantage obtained according to the present invention, is a synergy between degradability of a gum base polymer and the low-tack properties of a gum base polymer, the low-tack properties being obtained as a result of a plurality of side chains attached to the backbone of such gum base polymer.

It should be noted that a chewing gum composition according to the invention having low tack obtained as a result of the at least one gum base polymer comprising said backbone and said plurality of side chains may also comprise other means for inducing low tack without compromising the low tack effects obtained from the content of the at least one gum base polymer comprising said backbone and said plurality of side chains.

According to the invention, low tack of a chewing gum is provided by a plurality of side chains attached to the backbone of at least one gum base polymer in the chewing gum.

In an embodiment of the invention, the plurality of side chains is more hydrophilic than the backbone of the gum base polymer.

The gum base polymer comprising said backbone and said plurality of side chains may in an embodiment comprise a rather hydrophobic polymeric material as backbone to which more hydrophilic side-chains are attached.

According to the invention the biodegradable gum base polymer comprises a plurality of side chains attached to the backbone thereby effecting low tack of the polymer itself and of the chewing gum composition.

According to an advantageous embodiment of the invention, biodegradable gum base polymers in combination with gum base polymers comprising a plurality of side chains, which are more hydrophilic than the backbone facilitates improvement of both biodegradability and low tack properties of the chewing gum.

By application of short or long side-chains, the polarity of the gum base polymer may be altered, and a more pronounced hydrophilic part of the resulting gum base polymer may be obtained by increasing the number of hydrophilic side-chains, and particularly by increasing the length of the side-chains. The hereby obtained polarity of the gum base polymer may according to the invention result in a gum base polymer possessing advantageous low-tack properties. As a result according to the invention, low tack properties are provided to the chewing gum composition comprising such gum base polymer.

In an embodiment of the invention, the backbone of the gum base polymer is more hydrophobic than the plurality of side chains.

According to an embodiment, the gum base polymer comprising said backbone and said plurality of side chains may comprise a rather hydrophilic polymeric material as backbone to which more hydrophobic side-chains are attached. By application of short or long side-chains, the polarity of the gum base polymer may be altered, and the degree of polarity of the gum base polymer may be changed by adjusting the number of hydrophobic side-chains, and particularly by variation of the length of the side-chains. The hereby obtained polarity of the gum base polymer may according to the invention result in a gum base polymer possessing advantageous low-tack properties. As a result according to the invention, low tack properties are provided to the chewing gum composition comprising such gum base polymer.

In an embodiment of the invention, the gum base polymer comprising the plurality of side chains forms an amphiphilic molecular structure.

In an embodiment of the invention, said plurality of side chains attached to the backbone of at least one gum base polymer provides low tack properties to said gum base polymer.

In an embodiment of the invention, the side chains are covalently attached to the backbone of the gum base polymer.

In an embodiment of the invention, the side chains are directly attached to carbon atoms of the backbone of the gum base polymer.

In an embodiment of the invention, the side chains are attached via -C(O)O- groups to the backbone of the gum base polymer.

In an embodiment of the invention, the side chains are attached via -C-C(O)O-groups to the backbone of the gum base polymer.

In an embodiment of the invention, the side chains comprise alkylene oxide groups.

In an embodiment of the invention, the side chains comprise poly alkylene oxide monomers.

In an embodiment of the invention, the side chains comprise an acrylate ester of a poly alkylene glycol.

In an embodiment of the invention, the side chains comprise a methacrylate ester of a poly alkylene glycol.

In an embodiment of the invention, the hydrophilicity of the side chains is provided by the alkyleneoxy content of the side chains.

In an embodiment of the invention, the number of side chains attached to the backbone of the gum base polymer is at least 2.

In an embodiment of the invention, the number of side chains attached to the backbone of the gum base polymer is at least 3.

In an embodiment of the invention, the number of side chains attached to the backbone of the gum base polymer is at least 4.

In an embodiment of the invention, the number of side chains attached to the backbone of the gum base polymer is at least 5.

In an embodiment of the invention, the number of side chains attached to the backbone of the gum base polymer is in the range of 2 to 50.

In an embodiment of the invention, the number of side chains attached to the backbone of the gum base polymer is in the range of 5 to 10.

In an embodiment of the invention, the ratio of side chains to backbone of the gum base polymer is in the range of 2:1 to 50:1.

In an embodiment of the invention, the ratio of side chains to backbone of the gum base polymer is in the range of 5:1 to 10:1.

In an embodiment of the invention, the weight ratio in at least one gum base polymer of said side-chains to said backbone is in the range of 1:50 to 1:1, preferably in the range of 1:20 to 1:5.

In an embodiment of the invention, the elastomeric properties and the hydrophilicity is prefixed by means of the ratio of side chains to backbone of the gum base polymer.

According to the invention, said at least one gum base polymer comprising said backbone and said plurality of side chains is a graft copolymer. Accordingly, low tack properties of the chewing gum composition are according to this embodiment effected by at least one graft copolymer.

According to a preferred embodiment of the invention, the side chains of the gum base polymer differ from the polymeric material forming the backbone.

According to an embodiment of the invention, the gum base polymers comprising said backbone and said plurality of side chains are formed as graft copolymers in different ways. One known technique involves that a monomer is polymerised in the presence of a polymer with side-chain formation resulting from chain-transfer. A second way of grafting involves that a monomer is polymerised in the presence of a polymer having reactive functional groups or positions that are capable of being activated. A third method of grafting involves two polymers having reactive functional groups are co-reacted

By obtaining a polarity of the graft copolymer by way of a difference in hydrophilicity and hydrophobicity of the backbone in relation to the side-chains, low-tack properties are obtained.

In an embodiment of the invention, all of said gum base polymers comprising said backbone and said plurality of side chains are graft copolymers.

In an embodiment of the invention, said graft copolymers have low tack properties.

It should be noted that according to an advantageous embodiment of the invention, the chewing gum composition comprises at least one graft copolymer, which exhibits low tack properties and which as a result of these inherent low tack properties provides low tack to the chewing gum composition. According to this preferred embodiment, low tack properties of the chewing gum composition are obtained as a result of the content of this graft copolymer.

It should be noted that a chewing gum composition according to the invention having low tack obtained as a result of the graft copolymer may also comprise other means for inducing low tack (eg. fats, emulsifiers, glycerol monostearate, silica) without compromising the low tack effects obtained from the content of the graft copolymer,

In an embodiment of the invention, said chewing gum composition has a total content of gum base polymers comprising in the range of 5% to 90%, preferably 15% to 70% by weight of said chewing gum composition.

In an embodiment of the invention, said at least one gum base polymer comprising said backbone and said plurality of side chains comprises at least 5%, preferably at least 10%, and most preferably at least 20% by weight of said total content of gum base polymers.

In an embodiment of the invention, said at least one gum base polymer comprising said backbone and said plurality of side chains comprises in the range of 10% to 100% by weight of said total content of gum base polymers.

According to an advantageous embodiment of the invention, graft copolymers comprise in the range of 10% to 100% by weight of said total content of gum base polymers.

In an embodiment of the invention, at least one of said biodegradable polymers comprises a plurality of side chains attached to the backbone.

According to the invention, low tack of the chewing gum composition is provided by a plurality of side chains attached to the backbone of at least one biodegradable gum base polymer.

In an advantageous embodiment of the invention, side chains may be attached to the backbone of all gum base polymers in the chewing gum composition.

In an embodiment of the invention, the chewing gum composition comprises at least two different gum base polymers.

In an embodiment of the invention, the chewing gum composition comprises at least one first biodegradable gum base polymer and at least one further gum base polymer comprising a plurality of side chains attached to the backbone.

In an embodiment of the invention, the at least one further gum base polymer is only slightly biodegradable.

In an embodiment of the invention, the at least one further gum base polymer is biodegradable.

According to an advantageous embodiment of the invention, when all of the gum base polymers applied in the chewing gum composition are biodegradable, the desirable low tack properties are particularly improved by the synergy effect between the degradability of all the gum base polymers and the side chains attached to the backbone of at least one gum base polymer.

In an embodiment of the invention, all of said gum base polymers in the chewing gum composition are biodegradable.

In an embodiment of the invention, the plurality of side chains is grafted to the backbone of the gum base polymer.

In an embodiment of the invention, the backbone of the gum base polymer is pre-synthesized whereafter the plurality of side chains is grafted to the backbone of the gum base polymer.

In an embodiment of the invention, the backbone of the gum base polymer is derived from a branched polymer.

In an embodiment of the invention, the backbone of the gum base polymer is derived from a linear polymer.

In an embodiment of the invention, the backbone of the gum base polymer is substantially linear.

In an embodiment of the invention, the backbone of the gum base polymer is copolymeric of a type selected from the group consisting of random-, alternating-, blocking- or combinations thereof.

In an embodiment of the invention, the biodegradable gum base polymer is degradable under the exposure to light.

In an embodiment of the invention, the biodegradable gum base polymer is enzymatically degradable.

In an embodiment of the invention, the biodegradable gum base polymer is elastomeric.

In an embodiment of the invention, the biodegradable gum base polymer is resinous.

In an embodiment of the invention, the biodegradable gum base polymer is a synthetic gum base polymer.

In an embodiment of the invention, the biodegradable gum base polymer comprises at least one polyester gum base polymer.

According to an advantageous embodiment of the invention, low tack properties may be invoked in the polyester gum base polymer by way of a plurality of side chains attached to the backbone of the polyester polymer.

Thus, a synergy effect may be obtained as a self-increasing effect of the biodegradability and low tack properties resulting from the low tack properties induced by the attached side chains and the biodegradability of the polyester polymer.

According to an embodiment of the invention, an advantageous biodegradable gum base polymer may comprise a backbone of polyester and side chains of higher hydrophilicity such as polyethers.

In an embodiment of the invention, the biodegradable gum base polymer is a polyester polymer comprising alcohol monomers and acid monomers.

In an embodiment of the invention, the polyester polymer is a copolymer comprising at least two monomers selected from the group consisting of lactic acid, lactide, glycolic acid, glycolide, ε-caprolactone, δ-valerolactone, trimethylene carbonate (TMC) and dioxanone, citric acid, adipic acid, ethylene oxide, ethylene glycol, propylene oxide, propylene glycol and combinations thereof.

In an embodiment of the invention, the polyester polymer is selected from the group consisting of poly(lactic acid), polylactide, poly(glycolic acid), polyglycolide, poly(citric acid), polycaprolactone and combinations thereof.

In an embodiment of the invention, the backbone of the gum base polymer is polyester comprising a plurality of side chains.

In an embodiment of the invention, the backbone of the gum base polymer is polyester comprising a plurality of side chains, wherein the number of side chains attached to the backbone of the gum base polymer is in the range of 5 to 10.

In an embodiment of the invention, the backbone of the gum base polymer is polyester comprising a plurality of side chains, wherein the ratio of the side chains to the backbone of the gum base polymer is in the range of 5:1 to 10:1.

In an embodiment of the invention, the backbone of the gum base polymer is polyester comprising a plurality of side chains, wherein the plurality of side chains comprises alkylene oxide groups.

In an embodiment of the invention, the backbone of the gum base polymer is polyester comprising a plurality of side chains, wherein the plurality of side chains comprises poly alkylene oxide monomers.

In an embodiment of the invention, the composition is selected from the group consisting of tabletted chewing gum, compressed chewing gum and center-filled chewing gum.

In an embodiment of the invention, the chewing gum composition further comprises a component selected from the group consisting of plastizicers, sweeteners, flavors, colorants, emulsifiers, fillers, nutraceuticals, functional ingredients, dental vehicles and pharmaceutical ingredients.

In an embodiment of the invention, the chewing gum composition further comprises a coating.

In an embodiment of the invention, the chewing gum composition further comprises an exterior protective barrier enclosing the composition.

In an embodiment of the invention, the exterior protective barrier is a blister pack.

The invention further relates to a method of manufacturing a chewing gum composition according to any of the claims 1-10 comprising the step of providing said gum base polymer including the steps of providing said backbone and grafting said side chains to said backbone.

### The drawings

The invention will be described with reference to the following figures, of which
- fig. 1: illustrates a principle sketch of a conventional chewing gum deposited on a surface, and environmental factors influencing the chewing gum, and
- fig. 2a - 2d: illustrate principle sketches of a chewing gum according to the invention deposited on a surface and environmental factors influencing the chewing gum.

### Detailed description

Chewing gum of the present invention typically comprises a water-soluble bulk portion, a water-insoluble chewable gum base portion and flavouring agents. The water-soluble portion dissipates with a portion of the flavouring agent over a period of time during chewing. The gum base portion is retained in the mouth throughout the chew.

The gum base is the masticatory substance of the chewing gum, which imparts the chew characteristics to the final product. The gum base typically defines the release profile of flavors and sweeteners and plays a significant role in the chewing gum product. Most importantly, the gum base comprises the gum base polymers, which are typically known as natural and synthetic elastomers, elastomer plasticizers, natural and synthetic resins, and elastomeric and resinous polymers, etc. Some polymeric materials may exhibit both elastomeric and resinous properties.

The term "polymer" is herein used to refer to a polymeric substance, that is to say a substance composed of macromolecules. In some instances, the term polymer may be used herein, even though it would be more correct to refer to macromolecules of the polymer.

Typically, the term "macromolecule" refers to a molecule of high relative molecular mass, the structure of which comprises multiple repetitions of units derived from molecules of lower relative molecular mass. Basically, as used herein, the term macromolecule refers to the molecules of which a polymer is composed.

A chain in a polymer is typically a linear or branched sequence of constitutional units between two boundary constitutional units, each of which may be either an endgroup, a branch point or an otherwise-designated characteristic feature of a macromolecule in the polymer.

As used herein, the term "backbone" refers to the main chain of the macromolecules of a polymer. When referring to the backbone of a polymer, it should be understood as the backbone of each macromolecule of which the polymer is composed.

As used herein, the term "side-chain" refers to an oligomeric or polymeric species attached to a macromolecular chain, i.e. a chain, typically the backbone, of a macromolecule in a polymer.

As used herein, the term "graft copolymer" refers to a polymer of which the macromolecules are graft macromolecules, each of which contains a main chain and side-chains having chemical, constitutional or configurational features that differ from those of the main chain.

As used herein, the wording "grafting onto" refers to connecting side-chains, i.e. grafts, with a main chain, i.e. a backbone. The wording may refer to the grafting method "grafting onto" but other procedures like "grafting from" and "grafting through" may be applied as well, and the "grafting through" may be preffered.

As used herein, the term "biodegradable" broadly designates the ability of the applied gum base polymers to degrade when subjected to environmental influence, e.g. moist, water, heat, air, light, sunshine, enzymes, micro-organisms, etc. It is typically preferred that a chewing gum residue left in the nature vanishes or degrades at least partly when left in the environment, but it is noted that biodegradable also designates a more active process where the degradation is increased, triggered or accelerated by actively induced measures or physical factors such as enzymes. Such an active measure may e.g. also relate to the use of cleaning agents dedicated to the purpose of triggering a degradation of the chewing gum residue rather than necessarily facilitating immediate removal. Such environmental degradation may of course also refer to a complete degradation of the chewing gum residue but it may also in many cases refer to the obtaining of low-tack to surface, either by avoiding any tack at all to a surface or at least obtaining a release from a surface by a residue which has already been fastened to a surface. Typically, a biodegradable gum base polymer may broadly be regarded as an environmentally degradable gum base polymer, i.e. a gum base polymer, which is degradable in the environment.

As used herein, the phrasing "gum base polymer" relates to the polymeric material defining the basic properties of chewing gum, i.e. the properties of the substance which doesn't dissolve within a few minutes or hours when the chewing gum is chewed in the mouth. Such gum base polymers may e.g. relate to elastomer and/or resinous polymers typically applied as the main functioning part of the "nucleus" of the chewing gum. It should however be noted that such a nucleus under some circumstances, typically when plasticized properly, may be formed by one or several elastomers alone or by one or several resinous polymers.

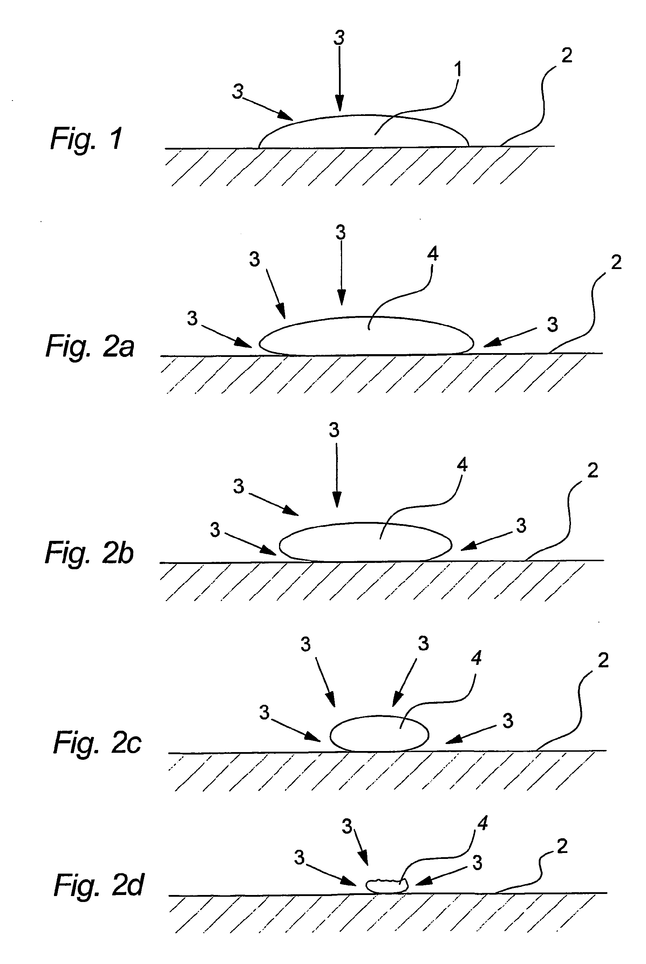

Fig. 1 illustrates in a principle sketch a conventional chewing gum 1 adhered to a surface 2 and environmental factors 3 influencing the chewing gum from above. However, the chewing gum is strongly adhered to the surface and thus the chewing gum is not degraded or removed by the influence of environmental factors.
Figs. 2a - 2d illustrate in principle sketches a chewing gum 4 according to the invention deposited on a surface 2 and environmental factors 3 influencing the chewing gum. As a result of the low-tack properties of the chewing gum, the chewing gum is not strongly adhered to the surface and thereby it is obtained that the environmental factors have improved access to the chewing gum surface, especially the part of the surface facing downwards against the surface 2. Hereby, the degradation of the chewing gum is enhanced. Moreover, the content of biodegradable polymers in the chewing gum result in a degradation of the chewing gum and thereby a reduced tack to the surface 2. The reduced tack leads to better access for environmental factors, increased degradation, leading to reduced adherence, etc. Thus, a synergy is obtained in the chewing gum according to the invention from the content of biodegradable gum base polymer and the content of gum base polymer having side chains attached to the backbone. In figs. 2a, 2b, 2c, and 2d the basic progress in degradation is illustrated.

Moreover, as illustrated in figs. 2a - 2d, an environmental chewing gum according to the invention facilitates a self-increasing effect of biodegradability and low-tack of a chewing gum lump adhered to a surface leading to improved degradation and release from the surface to which the chewing gum is adhered. As the chewing gum does not only comprise biodegradable polymers but also improved low-tack properties obtained as a result of a plurality of side chains attached to the backbone of one or more gum base polymers in the chewing gum, the initial degradation is promoted by an improved access of environmental factors such as moisture, oxygen, etc. to the chewing gum surface. The improved access resulting from a reduced tack to the surface is thereby commencing degradation, which again invokes a reduced tack to the surface, more degradation, lesser tack, etc.

Accordingly, an environmental chewing gum is obtained by providing a chewing gum in which a synergy between low-tack properties and biodegradable properties is facilitated. The environmental chewing gum according to the invention can be obtained by way of including in the chewing gum composition at least one biodegradable gum base polymer and at least one gum base polymer comprising a plurality of side chains attached to its backbone. In preferred embodiments, this gum base polymer having a plurality of side chains is a graft copolymer. In some preferred embodiments, a gum base polymer having a plurality of side chains attached to the backbone is also a biodegradable gum base polymer.

As used herein, the term "low-tack gum base polymer" is used to refer to the gum base polymer, which according to the invention provides low tack in the chewing gum by having a plurality of side chains attached to the backbone.

There are various combinations of backbone and side-chains of the low-tack gum base polymer applied in a chewing gum according to the invention.

In an embodiment of the invention, the low-tack gum base polymers may comprise backbone of biodegradable polymeric material and side-chains of non-degradable polymeric material. The biodegradable part, as it is the backbone may usually comprise the major part of such graft copolymers. According to the invention, such rather degradable graft copolymers may be applicable as the sole polymer of the chewing gum, provided that the texture is satisfactory. In some embodiments, it is preferred to apply one or more further polymers, which may be of linear, branched, conventional, or biodegradable nature, and which may or may not be graft copolymers.

In an embodiment of the invention, the low-tack gum base polymers may comprise backbone of biodegradable polymeric material and side-chains of biodegradable polymeric material. According to the invention, such biodegradable graft copolymers may be applicable as the sole polymer of the chewing gum, provided that the texture is satisfactory. In some embodiments, it is preferred to apply one or more further polymers, which may be of linear, branched, conventional, or biodegradable nature, and which may or may not be graft copolymers.

Examples are provided in the following of biodegradable gum base polymers, which may be applied in the chewing gum, typically in combination with one or more low-tack gum base polymers. biodegradable gum base polymers include polyesters, polycarbonates, polyesteramides, polyesterurethanes, and combinations thereof.

Polycarbonates may typically be co-polymerised with polyesters. Some typically preferred cyclic carbonates, which may be used as starting material , may e.g. comprise trimethylene carbonate, 2,2-dimethyltrimethylene carbonate, 2-methyltrimethylene carbonate, 3-methyltrimethylene carbonate, 2,3-dimethyltrimethylene carbonate, 2,4-dimethyltrimethylene carbonate, 2,3,4-trimethyltrimethylene carbonate, 2,3,3,4-tetramethyltrimethylene carbonate, etc.

In some embodiments, suitable polyesteramides can be constructed from monomers of the following groups: dialcohols, such as ethylene glycol, 1,4-butanediol, 1,3-propanediol, 1,6-hexanediol diethylene glycol and others; and/or dicarboxylic acid, such as oxalic acid, succinic acid, adipic acid and others, including those in the form of their respective esters (methyl, ethyl, etc.); and/or hydroxycarboxylic acids and lactones, such as caprolactone and others; and/or amino alcohols, such as ethanolamine, propanolamine, etc.; and/or cyclic lactams, such as .epsilon.-caprolactam or laurolactam, etc.; and/or .omega.-aminocarboxylic acids, such as aminocaproic acid, etc.; and/or mixtures (1:1 salts) of dicarboxylic acids such as adipic acid, succinic acid etc. and diamines such as hexamethyl enediamine, diaminobutane, etc.

In the case where the polymer mixture is based extensively on thermoplastic starch and an aromatic polyester, an aliphatic-aromatic copolyester, or a polyesteramide, it may be advantageous to add an aliphatic polyester or copolyester, such as polycaprolactone, for example, as a further component. As an example of this there may be mentioned a polymer mixture consisting of thermoplastic starch, at least one polyethylene terephthalate (PET) or a polyalkylene terephthalate, and polycaprolactone. Other examples of aliphatic polyesters or copolyesters are polylactic acid, polyhydroxybutyric acid, polyhydroxybutyric acid-hydroxyvaleric acid copolymer, and/or mixtures thereof.

Suitable polyesters may be obtained through polycondensation polymerisation or ring-opening polymerisation reactions. Some preferred polyesters include those polymerised from at least one carboxylic acid and at least one aliphatic di- or polyfunctional alcohols. The carboxylic acids may include aromatic dicarboxylic acids and aliphatic di- or polyfuncional carboxylic acids. In some preferred embodiments, the majority of the carboxylic acids are aliphatic.

Some of the preferred polyesters according to the invention may e.g. be prepared by step-growth polymerization of di-, tri- or higher-functional alcohols or esters thereof with di-, tri- or higher-functional aliphatic or aromatic carboxylic acids or esters thereof. Likewise, also hydroxy acids or anhydrides and halides of polyfunctional carboxylic acids may be used as monomers. The polymerization may involve direct polyesterification or transesterification and may be catalyzed. Use of branched monomers suppresses the crystallinity of the polyester polymers. Mixing of dissimilar monomer units along the chain also suppresses crystallinity. To control the reaction and the molecular weight of the resulting polymer it is possible to stop the polymer chains by addition of monofunctional alcohols or acids and/or to utilize a stoichiometric imbalance between acid groups and alcohol groups or derivatives of either. Also the adding of long chain aliphatic carboxylic acids or aromatic monocarboxylic acids may be used to control the degree of branching in the polymer and conversely multifunctional monomers are sometimes used to create branching. Moreover, following the polymerization monofunctional compounds may be used to end cap the free hydroxyl and carboxyl groups.

Examples of aliphatic di- or polyfunctional carboxylic acids, which may be applied as monomers of suitable polyesters include oxalic, malonic, citric, succinic, malic, tartaric, fumaric, maleic, glutaric, glutamic, adipic, glucaric, pimelic, suberic, azelaic, sebacic, dodecanedioic acid, etc. Likewise, specific examples of aromatic polyfunctional carboxylic acids may be terephthalic, isophthalic, phthalic, trimellitic, pyromellitic and naphthalene 1,4-, 2,3-, 2,6-dicarboxylic acids and the like. Some preferred polyesters are disclosed in CA2523510.

In a preferred embodiment, aliphatic dicarboxylic acids applied in the polyesters are selected from aliphatic dicarboxylic acids having from 4 to 12 carbons, such as succinic acid, glutaric acid, 2-methylglutaric acid, 3-methylglutaric acid, 2,2-dimethylglutaric acid, adipic acid, pimelic acid, suberic acid, azelaic acid and sebacic acid, higher homologues and stereoisomers and mixtures thereof. Preferred aliphatic dicarboxylic acids in this embodiment are succinic acid, glutaric acid, adipic acid, pimelic acid, azelaic acid and sebacic acid, and mixtures thereof.

In an embodiment, aromatic dicarboxylic acids applied in the polyesters contain two carboxyl groups which are bound to one aromatic system. Preferably, the aromatic system is carboaromatic, such as phenyl or naphthyl. In the case of polynuclear aromatics, the two carboxyl groups may be bound to the same ring or different rings. The aromatic system can also have one or more alkyl groups, for example methyl groups. The aromatic dicarboxylic acid is then generally selected from aromatic dicarboxylic acids having from 8 to 12 carbons, such as phthalic acid, isophthalic acid, terephthalic acid, 1,5- and 2,6-naphthalenedicarboxylic acid. Preferred aromatic dicarboxylic acids in this embodiment are terephthalic acid, isophthalic acid and phthalic acid and mixtures thereof.

Furthermore, some usually preferred polyfunctional alcohols suitable for preparing advantageous polyesters according to the invention contain 2 to 100 carbon atoms as for instance polyglycols and polyglycerols. Suitable examples of alcohols, which may be employed in the polymerization process as such or as derivatives thereof, includes polyols such as ethylene glycol, 1,2-propanediol, 1,3-propanediol, 1,3-butanediol, 1,4-butanediol, 1,6-hexanediol, diethylene glycol, 1,4-cyclohexanediol, 1,4-cyclohexanedimethanol, neopentyl glycol, glycerol, trimethylolpropane, pentaerythritol, sorbitol, mannitol, etc. For the purpose of illustration and not limitation, some examples of alcohol derivatives include triacetin, glycerol palmitate, glycerol sebacate, glycerol adipate, tripropionin, etc.

Additionally, with regard to polyesters polymerized from alcohols or derivatives thereof and carboxylic acids or derivatives thereof, chain-stoppers sometimes used are monofunctional compounds. They are preferably either monohydroxy alcohols containing 1-20 carbon atoms or monocarboxylic acids containing 2-26 carbon atoms. General examples are medium or long-chain fatty alcohols or acids, and specific examples include monohydroxy alcohols such as methanol, ethanol, butanol, hexanol, octanol, etc. and lauryl alcohol, myristyl alcohol, cetyl alcohol, stearyl alcohol, stearic alcohol, etc. and monocarboxylic acids such as acetic, lauric, myristic, palmitic, stearic, arachidic, cerotic, dodecylenic, palmitoleic, oleic, linoleic, linolenic, erucic, benzoic, naphthoic acids and substituted napthoic acids, 1-methyl-2 naphthoic acid and 2-isopropyl-1-naphthoic acid, etc.

Typically, an acid catalyst or a transesterification catalyst may be used in such polyester polymerization processes, and non-limiting examples of those are the metal catalysts such as acetates of manganese, zinc, calcium, cobalt or magnesium, and antimony(III)oxide, germanium oxide or halide and tetraalkoxygermanium, titanium alkoxide, zinc or aluminum salts.

In a preferred embodiment of the invention, the polyesters can for example include copolymers containing any combination of the monomers lactic acid, lactide, glycolic acid, glycolide, citric acid, adipic acid, caprolactone, ethylene oxide, ethylene glycol, propylene oxide, propylene glycol and combinations thereof.

Examples of suitable polyesters obtainable by ring-opening polymerization include polyesters comprising combinations of cyclic monomers including the following:
D,L-lactide/ε-caprolactone,
D,L-lactide/TMC
D,L-lactide/δ-valerolactone
D,L-lactide/dioxanone
D,L-lactide
L-lactide/ε-caprolactone
L-lactide/TMC
L-lactide/δ-valerolactone
L-lactide/dioxanone
L-lactide

D,L-lactide/glycolide/ε-caprolactone
D,L-lactide/glycolide/TMC
D,L-lactide/glycolide/δ-valerolactone
D,L-lactide/glycolide/dioxanone
D,L-lactide/glycolide

L-lactide/glycolide/ε-caprolactone
L-lactide/glycolide/TMC
L-lactide/glycolide/δ-valerolactone
L-lactide/glycolide/dioxanone
L-lactide/glycolide

glycolide/ε-caprolactone
glycolide/TMC
glycolide/δ-valerolactone
glycolide/dioxanone
glycolide

D,L-lactide/L-lactide/ε-caprolactone
D,L-lactide/L-lactide/TMC
D,L-lactide/L-lactide/δ-valerolactone
D,L-lactide/L-lactide/dioxanone
D,L-lactide/L-lactide
D,L-lactide/L-lactide/glycolide/ε-caprolactone
D,L-lactide/L-lactide/glycolide/TMC
D,L-lactide/L-lactide/glycolide/δ-valerolactone
D,L-lactide/L-lactide/glycolide/dioxanone
D,L-lactide/L-lactide/glycolide

Some examples of the resulting polyester gum base polymers include poly (L-lactide-co-trimethylenecarbonate); poly (L-lactide-co-epsilon-caprolactone); poly (D, L-lactide-co-trimethylenecarbonate); poly (D, L-lactide-co-epsilon-caprolactone); poly (meso-lactide-co-trimethylenecarbonate); poly (mesolactide-co-epsilon-caprolactone); poly (glycolide-cotrimethylenecarbonate); poly (glycolide-co-epsilon-caprolactone), etc. Suitable polyesters are also disclosed in WO 2004/028270.

In an embodiment, the polyesters may be obtained by the reaction between at least one dimer acid and at least one glycol or alcohol. Such glycols can include, for example, glycerin, propylene glycol, ethylene glycol, poly(ethylene glycol), poly(propylene glycol), poly(ethylene glycol-co-propylene glycol), while such alcohols can include, for example, methanol, ethanol, propanol, and butanol, and such dimer acids can include, for example, adipic acid and citric acid, etc.

Some specific examples of suitable polyesters include poly(lactic acid), polylactide, poly(glycolic acid), polyglycolide, poly(citric acid), polycaprolactone, polyhydroxyalkanoate, and combinations thereof.

The abovementioned biodegradable polymers including polyesters, polycarbonates, polyesteramides, polyesterurethanes, and combinations thereof are examples of polymers, which may be applied and mixed with one or more low-tack gum base polymers in a chewing gum according to the invention. In an alternative and also preferred embodiment of the invention, these polymers may themselves form part of a low-tack gum base polymer according to the invention.

In some preferred embodiments, biodegradable materials in the form of polyesters such as those listed above may be applied as the backbone material or side-chain material in the low-tack gum base polymer. When the polyesters are forming the backbones, they are polymeric. When the polyesters are forming the side-chains, they are typically polymeric and of shorter chain length than the backbone and may in some embodiments be oligomeric.

Examples of polymeric materials, which are generally not biodegradable. These polymeric materials are advantageously applied as backbone material or side-chain material in the low-tack gum base polymer in a chewing gum, on the condition that at least one biodegradable gum base polymer is comprised in the chewing gum as well. When the materials are forming the backbones, they are polymeric. When the materials are forming the side-chains, they are typically polymeric and of shorter chain length than the backbone and may in some embodiments be oligomeric.

Some of preferred materials for side-chains attached in the low-tack gum base polymer applied in the chewing gum according to the invention includes polyalkylene oxides including polyalkylene glycols. Specific non-limiting suitable examples include poly(ethylene glycol), poly(propylene glycol) and poly(butylene glycol).

Further suitable side-chain materials include short chain polyesters, polyvinyl alcohols, polyanhydrides, polyethers, polyamides, siloxanes, polyvinyl acetate, and prolamines and starches

The side-chains are grafts to the backbone of low-tack gum base polymers, which is known in the art as graft copolymers. Biodegradable as well as not degradable low-tack gum base polymers applied in the chewing gum according to the invention may be graft copolymers.

In some embodiments, the side-chains may be terminated by short groups such as a methyl group, an ethyl group, a methyl ether group, etc. Moreover, the side-chains may be attached to the backbone by an intermediate group such as e.g. a methacrylate group or ethacrylate group or other groups, or the backbone may for example be prepared for grafting for example by way of an acid anhydride.

In an advantageous embodiment of the invention, the side-chains of the low-tack gum base polymer are more hydrophilic as compared to the backbone. The low-tack gum base polymers hereby obtained are effective to induce low-tack properties to the chewing gum comprising such gum base polymers.

In further advantageous embodiments, the side-chains of the low-tack gum base polymer are less hydrophilic, sometimes even hydrophobic, as compared to the backbone. The low-tack gum base polymers hereby obtained are effective to induce low-tack properties to the chewing gum comprising such gum base polymers.

In some embodiments of the invention, some additive components for generating an increased degradability may be included in the chewing gum of the present invention. Such additive components may be useful for promoting the low-tack properties obtained according to the invention even further. Examples of such additive components are disclosed in US2007/0042078, US2007/0104829, and US2007/0042079. In such embodiments, the term "reduced-stick and/or increased degradability inducing additive component(s)" is used herein to refer to additive components that are incorporated in a gum composition such that the gum composition exhibits reduced stickiness and/or increased degradability as compared to the same gum composition in the absence of the reduced-stick inducing additive components. It should be further understood that in some embodiments, the reduced-stick inducing additive component may be the same as the increased degradability inducing additive component, and in some embodiments it may be different.

The reduced-stick inducing components may for example be any components that cause the final Tg of an elastomer used in a chewing gum composition to change no more than about three degrees, up or down from the initial glass transition temperature (Tg) during processing. The reduced-stick inducing additive components also may be any additive components that serve as a release agent, as defined herein. Furthermore, the reduced-stick additive components may be any additive components that crystallize or form domain regions in the gum base elastomers. Additionally, the reduced-stick inducing additive components may be any additive components that have a hydrophobic portion and a hydrophilic portion, wherein the hydrophobic portion is capable of orienting inwardly within a gum bolus and the hydrophilic portion is capable of orienting outwardly within a gum bolus. Reduced-stick inducing additive components include, for example, oils and other fats that may be included in a gum composition in an amount sufficient to render the composition less sticky, both during processing and after processing of a chewing gum subsequent to chewing of the gum products made therefrom. These reduced-stick inducing additive components may be used to replace some or all of the elastomer solvent materials, such as resins and waxes conventionally used in chewing gum compositions. The reduced-stick inducing additive components may also act as elastomer processing aids to permit softening processing of elastomeric gum base polymers from solids to useful gum materials.

Any agent that is capable of enhancing degradation of a polymer may be incorporated in various chewing gum composition embodiments. Desirably, the agent may be lipophilic and may be incorporated in the gum base composition, that is mixed with the gum base polymers before addition of further chewing gum ingredients. In some embodiments, such an agent may serve to enhance the degradation of the gum product in the presence of light, i.e. by photodegradation. A useful agent that is capable of enhancing the degradation of elastomeric polymers in the presence of light is chlorophyll and derivatives thereof such as chlorophyllin, pheophytin, pyropheophytin and pheophorbide. Chlorophyll and its derivatives are capable of absorbing light and generating free radicals. The presence of free radicals may react with components of the elastomeric polymers to render them less sticky.

Other suitable additive components to enhance degradation include other photosensitizers such as phthalocyanine derivatives, riboflavin, hemoglobin, myoglobin, and heme. In some embodiments, the polymeric gum base component may be degraded by oxidation to form smaller discontinuous phases of polymer. In some embodiments, the polymer may interact with free radicals to increase the molecular weight. When certain elastomeric polymers are used in combination with the chlorophyll, such as polymers with unsaturated bonds, the chlorophyll may increase the molecular weight of the elastomeric polymer by inducing higher molecular weight reaction products caused by free radical generation. A variety of reaction possibilities may occur depending on such factors as the type of elastomeric polymer present, the amount of degradation agent present such as free-radical inducing agent, the particular chewing gum composition, as well as the type of light and environmental exposure of the chewing gum.

In some embodiments, the additive components capable of enhancing degradation of a polymer are encapsulated. Encapsulation may be desirable to prevent premature degradation of the chewing gum base polymers prior to mastication. The at least one agent capable of degrading an elastomeric polymer may be encapsulated as microcapsules or microparticles as described in PCT Publication No. WO 2004/064544. Suitable encapsulants include, but are not limited to, fats, polymers, carbohydrates, gum arabic and combinations thereof.

In some embodiments an agent capable of degrading an elastomer may be present in the chewing gum as part of a center-fill, and in some embodiments, the agent may be present in a coating of the chewing gum. The agent may be encapsulated or non-encapsulated.

In an embodiment, an agent capable of degrading an elastomer may be present in an amount sufficient to substantially degrade the chewing gum product subsequent to mastication over time, such as within weeks or a few months. Desirably, such an agent capable of degrading an elastomer may be present in an amount from about 0.01% to about 0.3% by weight of the gum base. More desirably, this agent may be present in an amount from about 0.05% to about 0.2% by weight of the gum base, preferably in an amount from about 0.07% to about 0.12% by weight of the gum base.

In some embodiments, chlorophyll may be present in an amount from about 0.0 1 % to about 0.3% by weight of the gum base, desirably in an amount from about 0.05% to about 0.2% by weight of the gum base, and preferably in an amount from about 0.07 to about 0.12% by weight of the gum base.

In some embodiments of the invention, it can be desirable to apply limited amounts of conventional elastomeric and resinous polymers in order to adjust and fine-tune the texture and mouth-feel of the chewing gum. In such circumstances, suitable conventional elastomers and resins may include natural rubber such as smoked or liquid latex and guayule, natural gums such as jelutong, lechi caspi, perillo, sorva, massaranduba balata, massaranduba chocolate, nispero, rosidinha, chicle, gutta percha, gutta kataiu, niger gutta, tunu, chilte, chiquibul, gutta hang kang, and the conventional synthetic elastomers such as SBR, PIB, butyl rubber, etc. without side-chains attached thereto should be kept in limited amounts in order not to compromise the low-tack properties of the chewing gum according to the invention. Likewise, the content of conventional elastomer plasticizers known in the art, such as glycerol ester of wood and gum rosin, glycerol ester of tall oil rosin, pentaerythritol ester of wood and gum rosin, and terpene resins should be kept very low.

Suitable chewing gum components, which may be added to the chewing gum in various preferred embodiments according to the invention may include waxes, softeners, fillers, bulk sweeteners, high intensity sweeteners, flavouring agents, emulsifiers, colours, acidulants, and antioxidants. Examples are provided in the following.

In order not to compromise the degradability of chewing gum according to the invention, the content of waxes should be kept low. Examples of waxes include those known in the chewing gum art such as petroleum wax, paraffin wax, normal-alkanic waxes, iso-alkanic waxes, and some synthetic waxes.

Softeners may advantageously be added. Softeners modify the texture, cause the hydrophobic and hydrophilic components of the gum to be miscible, and may further plasticize the gum base polymers. The emulsifiers, which belongs to the group of softeners, provide the gum with water-binding properties, which confer to the gum a pleasant smooth surface and reduce its adhesive properties.

Softeners suitable for use in the gum base include triglycerides of non-hydrogenated, partially hydrogenated and fully hydrogenated vegetable oils and tallow, cocoa butter and degreased cocoa powder and in addition to these the emulsifiers.

The group of triglycerides include cottonseed, palm, palm kernel, coconut, safflower, rapeseed, sunflower, tallow, soybean, cocoa butter, medium chained triglycerides and the like. The caproic, caprylic, capric, myristic, lauric and palmitic fatty acids of the triglycerides tend to plasticize the synthetic elastomers more than triglycerides containing predominantly stearic fatty acid.

To the group of emulsifiers belong the monoglycerides, diglycerides, acetylated mono and diglycerides, distilled mono- and diglycerides, glycerol monostearate, propylene glycol monostearate, Na-, K-, Mg- and Ca-stearates, glycerol triacetate, fatty acid monoglycerides (e.g. stearic, palmitic, oleic and linoleic acids), lactic acid esters and acetic acid esters of mono- and diglycerides, sugar esters of edible fatty acids also referred to as sucrose polyesters including those disclosed in WO 00/25598, lecithin and hydroxylated lecithin, most of these may contain triglyceride levels less than 2 percent by weight from their manufacturing processing,

The softeners including emulsifiers may be used alone or two or more in combination. Generally, softeners are added to the chewing gum substance to optimize the chewability and mouth feel of the gum.

Softeners also known in the art as plasticizers may constitute about 0.1 to 15 % by weight of the chewing gum. Further softener examples contemplated by the present invention include glycerine and lecithine. Also, some aqueous sweeteners, e.g. containing sorbitol, hydrogenated starch hydrolysate or corn syrup, may be used as softeners and binding agents in the chewing gum.

Typically, fillers may be added to the gum composition in limited amounts such as below 5% and not more than 20% by weight. Fillers modify the texture of the composition and aid in processing. Fillers suitable for use herein include magnesium and calcium carbonate, ground limestone and silicate types such as magnesium and aluminum silicate, kaolin and clay, aluminium oxide, silicium oxide, talc, as well as titanium oxide, mono-, di- and tricalcium phosphate, sodium sulphate, cellulose polymers such as ethyl, methyl and wood or mixtures thereof. The fillers may also include natural organic fibres such as fruit vegetable fibres, grain, rice, cellulose and combinations thereof.

Antioxidants prolong shelf-life and storage of chewing gum. Antioxidants suitable for use herein include butylated hydroxyanisole (BHA), butylated hydroxytoluene (BHT), betacarotenes, tocopherols, acidulants such as Vitamin C, propyl gallate, other synthetic and natural types or mixtures thereof.

Flavorants and colorants known in the chewing gum art may be applied to impart desired characteristics or remove or mask undesired characteristics.

Suitable bulk sweeteners include both sugar and non-sugar sweetening components. Bulk sweeteners typically constitute from about 5 to about 95% by weight of the chewing gum, more typically about 20 to about 80% by weight such as 30 to 60% by weight of the gum.

Useful sugar sweeteners are saccharide-containing components commonly known in the chewing gum art including, but not limited to, sucrose, dextrose, maltose, dextrins, trehalose, D-tagatose, dried invert sugar, fructose, levulose, galactose, corn syrup solids, and the like, alone or in combination.

Sorbitol can be used as a non-sugar sweetener. Other useful non-sugar sweeteners include, but are not limited to, other sugar alcohols such as mannitol, xylitol, hydrogenated starch hydrolysates, maltitol, isomaltol, erythritol, lactitol and the like, alone or in combination.

High-intensity artificial sweetening agents can also be used alone or in combination with the above sweeteners. Preferred high-intensity sweeteners include, but are not limited to sucralose, aspartame, salts of acesulfame, alitame, saccharin and its salts, cyclamic acid and its salts, glycyrrhizin, dihydrochalcones, thaumatin, monellin, twin sweet, stevioside, neotame and the like, alone or in combination. In order to provide longer lasting sweetness and flavor perception, it may be desirable to encapsulate or otherwise control the release of at least a portion of the artificial sweetener. Techniques such as wet granulation, wax granulation, spray drying, spray chilling, fluid bed coating, coascervation, encapsulation in yeast cells and fiber extrusion may be used to achieve the desired release characteristics. Encapsulation of sweetening agents can also be provided using another chewing gum component such as a resinous compound.

Addition of high-intensity sweeteners may be carried out at the gum base mixing stage or while mixing the final chewing gum substance.

Usage level of the artificial sweetener will vary considerably and will depend on factors such as potency of the sweetener, rate of release, desired sweetness of the product, level and type of flavor used and cost considerations. Thus, the active level of artificial sweetener may vary from about 0.02 to about 30% by weight, preferably 0.02 to about 8% per weight. Typically, high intensity sweeteners may be applied in a small amount in the range of 0.05 to 1 % by weight of the chewing gum substance. When carriers used for encapsulation are included, the usage level of the encapsulated sweetener will be proportionately higher. Combinations of sugar and/or non-sugar sweeteners can be used in the chewing gum formulation processed in accordance with the invention. Additionally, the softener may also provide additional sweetness such as aqueous sugar or alditol solutions.

If a low-calorie gum is desired, a low-caloric bulking agent can be used. Examples of low caloric bulking agents include polydextrose, Raftilose, Raftilin, fructooligosaccharides (NutraFlora^{®}), palatinose oligosaccharides; guar gum hydrolysates (e.g. Sun Fiber^{®}) or indigestible dextrins (e.g. Fibersol^{®}). However, other low-calorie bulking agents can be used.

The chewing gum according to the present invention may contain aroma agents and flavoring agents including natural and synthetic flavorings e.g. in the form of natural vegetable components, essential oils, essences, extracts, powders, including acids and other substances capable of affecting the taste profile. Flavoring agents may in some embodiments of the invention be encapsulated with the encapsulation materials defined elsewhere, below, in this text.

Examples of liquid and powdered flavorings include coconut, coffee, chocolate, cocoa, vanilla, grape fruit, orange, lime, menthol, liquorice, caramel aroma, honey aroma, peanut, walnut, cashew, hazelnut, almonds, pineapple, strawberry, raspberry, tropical fruits, cherries, cinnamon, peppermint, wintergreen, spearmint, eucalyptus, and mint, fruit essence such as from apple, pear, peach, strawberry, apricot, raspberry, cherry, pineapple, and plum essence. The essential oils include peppermint, spearmint, menthol, eucalyptus, clove oil, bay oil, anise, thyme, cedar leaf oil, nutmeg, and oils of the fruits mentioned above.

The chewing gum flavor may be a natural flavoring agent, which is freeze-dried, preferably in the form of a powder, slices or pieces or combinations thereof. The particle size may be less than 3 mm, less than 2 mm or more preferred less than 1 mm, calculated as the longest dimension of the particle. The natural flavoring agent may in a form where the particle size is from about 3 µm to 2 mm, such as from 4 µm to 1 mm. Preferred natural flavoring agents include seeds from fruit e.g. from strawberry, blackberry and raspberry.

Various synthetic flavors, such as mixed fruit flavors may also be used in the present chewing gum centers. As indicated above, the aroma agent may be used in quantities smaller than those conventionally used. The aroma agents and/or flavors may be used in the amount from 0.01 to about 30% by weight of the final product depending on the desired intensity of the aroma and/or flavor used. Preferably, the content of aroma/flavor is in the range of 0.2 to 3% by weight of the total chewing gum substance composition.

In an embodiment of the invention, the flavoring agents comprise natural and synthetic flavorings in the form of natural vegetable components, essential oils, essences, extracts, powders, including acids and other substances capable of affecting the taste profile.

Further chewing gum ingredients, which may be included in the chewing gum according to the present invention, include surfactants and/or solubilisers, especially when pharmaceutically or biologically active ingredients are present. As examples of types of surfactants to be used as solubilisers in a chewing gum composition according to the invention, reference is made to H.P. Fiedler, Lexikon der Hilfstoffe für Pharmacie, Kosmetik und Angrenzende Gebiete, pages 63-64 (1981) and the lists of approved food emulsifiers of the individual countries. Anionic, cationic, amphoteric or non-ionic solubilisers can be used. Suitable solubilisers include lecithin, polyoxyethylene stearate, polyoxyethylene sorbitan fatty acid esters, fatty acid salts, mono and diacetyl tartaric acid esters of mono and diglycerides of edible fatty acids, citric acid esters of mono and diglycerides of edible fatty acids, saccharose esters of fatty acids, polyglycerol esters of fatty acids, polyglycerol esters of interesterified castor oil acid (E476), sodium stearoyllatylate, sodium lauryl sulfate and sorbitan esters of fatty acids and polyoxyethylated hydrogenated castor oil (e.g. the product sold under the trade name CREMOPHOR), block copolymers of ethylene oxide and propylene oxide (e.g. products sold under trade names PLURONIC and POLOXAMER), polyoxyethylene fatty alcohol ethers, polyoxyethylene sorbitan fatty acid esters, sorbitan esters of fatty acids and polyoxyethylene steraric acid esters.

Particularly suitable solubilisers are polyoxyethylene stearates, such as for instance polyoxyethylene(8)stearate and polyoxyethylene(40)stearate, the polyoxyethylene sorbitan fatty acid esters sold under the trade name TWEEN, for instance TWEEN 20 (monolaurate), TWEEN 80 (monooleate), TWEEN 40 (monopalmitate), TWEEN 60 (monostearate) or TWEEN 65 (tristearate), mono and diacetyl tartaric acid esters of mono and diglycerides of edible fatty acids, citric acid esters of mono and diglycerides of edible fatty acids, sodium stearoyllatylate, sodium laurylsulfate, polyoxyethylated hydrogenated castor oil, blockcopolymers of ethylene oxide and propyleneoxide and polyoxyethylene fatty alcohol ether. The solubiliser may either be a single compound or a combination of several compounds. In the presence of an active ingredient, the chewing gum may preferably also comprise a carrier known in the art.

Emulsifiers, which are used as softeners may include tallow, hydrogenated tallow, hydrogenated and partially hydrogenated vegetable oils, cocoa butter, glycerol monostearate, glycerol triacetate, lechithin, mono-, di-and triglycerides, acetylated monoglycerides, fatty acids (e.g. stearic, palmitic, oleic and linoleic acids), and combinations thereof.

The chewing gum substance may optionally contain usual additives, such as binding agents, acidulants, fillers, coloring agents, preservatives, and antioxidants, for instance butylated hydroxytoluene (BHT), butyl hydroxyanisol (BHA), propylgallate and tocopherols.

Colorants and whiteners may include FD & C-type dyes and lakes, fruit and vegetable extracts, titanium dioxide, and combinations thereof.

The chewing gum according to the invention may further comprise active ingredients. Suitable active ingredients include Ephedrine, Magaldrate, Pseudoephedrine, Sildenafil, Xylocaine, Benzalconium chloride, Caffeine, Phenylephrine, Amfepramone, Orlistat, Sibutramine, Acetaminophen, Aspirin, Aluminium amino acetate, Aluminium amino acetate in combination with Magnesium oxide, Aluminium oxide hydrate in combination with Magnesiumoxide, Calcium carbonate in combination with Magnesium hydroxide, Calciumcarbonate, Dihydroxy Aluminium sodium carbonate, Magnesiumoxide, Glitazones, Metformin, Chlorpromazine, Cyclizine, Dimenhydrinat, Domperidone, Meclozine, Metoclopramide, Odansetron, Prednisolone, Promethazine, Acrivastine, Cetirizine, Cinnarizine, Clemastine, Desloratadine, Dexchlorpheniramine, Dimenhydrinate, Ebastine, Fexofenadine, Ibuprofen, Levolevoproricin, Loratadine, Meclozine, Mizolastine, Promethazine, Miconazole, Vitamin B 12, Folic acid, Ferro compounds, vitamin C, Chlorhexidine diacetate, Fluoride, Decapeptide KSL, Aluminium fluoride, Aminochelated calcium, Ammonium fluoride, Ammonium fluorosilicate, Ammonium monofluorphosphate, Calcium fluoride, Calcium gluconate, Calcium glycerophosphate, Calcium lactate, Calcium monofluorphosphate, Calciumcarbonate, Carbamide, Cetyl pyridinium chloride, Chlorhexidine, Chlorhexidine digluconate, Chlorhexidine Chloride, Chlorhexidine diacetate, CPP Caseine Phospho Peptide, Hexetedine, Octadecentyl Ammonium fluoride, Potasium fluorosilicate, Potassium Chloride, Potassium monofluorphosphate, Sodium bi carbonate, Sodium carbonate, Sodium fluoride, Sodium fluorosilicate, Sodium monofluorphosphate, Sodium tri polyphosphate, Stannous fluoride, Stearyl Trihydroxyethyl Propylenediamine Dihydrofluoride, Strontium chloride, Tetra potassium pyrophosphate, Tetra sodium pyrophosphate, Tripotassium orthophosphate, Trisodium orthophosphate, Alginic acid, Aluminium hydroxide, Sodium bicarbonate, Sildenafil, Tadalafil, Vardenafil, Yohimbine, Cimetidine, Nizatidine, Ranitidine, Acetylsalicylic acid, Clopidogrel, Acetylcysteine, Bromhexine, Codeine, Dextromethorphan, Diphenhydramine, Noscapine, Phenylpropanolamine, vitamin D, Simvastatin, Bisacodyl, Lactitol, Lactulose, Magnesium oxide, Sodium picosulfate, Senna glycosides, Benzocaine, Lidocaine, Tetracaine, Almotriptan, Eletriptan, Naratriptan, Rizatriptan, Sumatriptan, Zolmitriptan, Calcium, Chromium, Copper, Iodine, Iron, Magnesium, Manganese, Molybdenium, Phosphor, Selenium, Zinc, Nicotine, Nicotine bitartrate, Nicotine pftalate, Nicotine polacrilex, Nicotine sulphate, Nicotine tartrate, Nicotine citrate, Nicotine lactate, Chloramine, Hydrogenperoxide, Metronidazole, Triamcinolonacetonide, Benzethonium Chl., Cetyl pyrid. Chl., Chlorhexidine, Fluoride, Lidocaine, Amphotericin, Miconazole, Nystatin, Fish oil, Ginkgo Biloba, Ginseng, Ginger, Purple coneflower, Saw Palmetto, Cetirizine, Levocetirizine, Loratadine, Diclofenac, Flurbiprofen, Acrivastine Pseudoephedrine, Loratadine Pseudoephedrine, Glucosamine, hyaluronic acid, Decapeptide KSL-W, Decapeptide KSL, Resveratrol, Misoprostol, Bupropion, Nicotine, Ondansetron HCl, Esomeprazole, Lansoprazole, Omeprazole, Pantoprazole, Rabeprazole, Bacteria and the like, Loperamide, Simethicone, Acetylsalicylic acid and others, Sucralfate, Vitamin A, Vitamin B1, Vitamin B12, Vitamin B2, Vitamin B6, Biotin, Vitamin C, Vitamin D, Vitamin E, Folinic acid, Vitamin K, Niacin, Q10, Clotrimazole, Fluconazole, Itraconazole, Ketoconazole, Terbinafine, Allopurinol, Probenecid, Atorvastatin, Fluvastatin, Lovastatin, Nicotinic acid, Pravastatin, Rosuvastatin, Simvastatin, Pilocarpine, Naproxen, Alendronate, Etidronate, Raloxifene, Risedronate, Benzodiazepines, Disulfiram, Naltrexone, Buprenorphine, Codeine, Dextropropoxyphene, Fentanyl, Hydromorphone, Ketobemidone, Ketoprofen, Methadone, Morphine, Naproxen, Nicomorphine, Oxycodone, Pethidine, Tramadol, Amoxicillin, Ampicillin, Azithromycin, Ciprofloxacin, Clarithromycin, Doxycyclin, Erythromycin, Fusidic acid, Lymecycline, Metronidazole, Moxifloxacin, Ofloxacin, Oxytetracycline, Phenoxymethylpenicillin, Rifamycins, Roxithromycin, Sulfamethizole, Tetracycline, Trimethoprim, Vancomycin, Acarbose, Glibenclamide, Gliclazide, Glimepiride, Glipizide, Insulin, Repaglinide, Tolbutamide, Oseltamivir, Aciclovir, Famciclovir, Penciclovir, Valganciclovir, Amlopidine, Diltiazem, Felodipine, Nifedipine, Verapamil, Finasteride, Minoxidil, Cocaine, Buphrenorphin, Clonidine, Methadone, Naltrexone, Calciumantagonists, Clonidine, Ergotamine, β-blockers, Aceclofenac, Celecoxib, Dexiprofen, Etodolac, Indometacin, Ketoprofen, Ketorolac, Lornoxicam, Meloxicam, Nabumetone, Oiroxicam, Parecoxib, Phenylbutazone, Piroxicam, Tiaprofenic acid, Tolfenamic acid, Aripiprazole, Chlorpromazine, Chlorprothixene, Clozapine, Flupentixol, Fluphenazine, Haloperidol, Lithium carbonate, Lithium citrate, Melperone, Penfluridol, Periciazine, Perphenazine, Pimozide, Pipamperone, Prochloiperazine, Risperidone, Thioridizin, Fluconazole, Itraconazole, Ketoconazole, Voriconazole, Opium, Benzodiazepines, Hydroxine, Meprobamate, Phenothiazine, Aluminiumaminoacetate, Esomeprazole, Famotidine, Magnesium oxide, Nizatide, Omeprazole, Pantoprazole, Fluconazole, Itraconazole, Ketoconazole, Metronidazole, Amphetamine, Atenolol, Bisoprolol fumarate, Metoprolol, Metropolol, Pindolol, Propranolol, Auranofin, and Bendazac.

Further examples of useful active ingredients include active ingredients selected from the therapeutical groups comprising: Analgesic, Anaestetic, Antipyretic, Anti allergic, Anti-arrytmic, Appetite suppressant, Antifungal, Anti-inflammatory, Broncho dilator, Cardiovascular drugs, Coronary dilator, Cerebral dilator, Peripheral vasodilator, Anti-infective, Psychotropic, Anti- manic, Stimulant, Antihistamine, Laxative, Decongestrant, Gastro-intestinal sedative, Sexual dysfunction agent, Desinfectants, Anti-diarrheal, Anti-anginal substance, Vasodilator, Anti-hypertensive agent, Vasoconstrictor, Migraine treating agent, Antibiotic, Tranquilizer, Ntipsychotic, Anti-tumor drug, Anticoagulant, Antithrombotic agent, Hypnotic, Sedative, Anti-emetic, Anti-, auseant, Anticonvulsant, Neuromuscular agent, Hyper and hypoglycaemic, Thyroid and antithyroid, Diuretic, Antispasmodic, Uterine relaxant, Anti-obesity agent, Anoretic, Spasnolytics, Anabolic agent, Erythropoietic agent, Anti-asthmatic, Expectorant, Cough suppressant, Mucolytic, Anti-uricemic agent, Dental vehicle, Breath freshener, Antacid, Anti-diuretc, Anti-flatulent, Betablokker, Teeth Whitener, Enzyme, Co-enzyme, Protein, Energy booster, Fiber, Probiotics, Prebiotics, Antimicrobial agent, NSAID, Anti-tussives, Decongestrants, Anti-histamines, Expectorants, Anti-diarrheals, Hydrogen antagonists, Proton pump inhibitors, General nonselective CNS depressants, General nonselective CNS stimulants, Selectively CNS function modyfying drugs, Antiparkinsonism, Narcotic-analgetics, Analgetic-antipyretics, Psychopharmacological drugs, and Sexual dysfunction agents.

Moreover, further examples of useful active ingredients include: Casein glyco-macro-peptide (CGMP), Nicotine, Nicotine bitartrate, Nicotine sulphate, Nicotine tartrate, Nicotine pftalate, Nicotine lactate, Nicotinecitrate, Nicotine polacrilex, Triclosan, Cetyl pyridinium chloride, Domiphen bromide, Quarternary ammonium salts, Zinc components, Sanguinarine, Fluorides, Alexidine, Octonidine, EDTA, Aspirin, Acetaminophen, Ibuprofen, Ketoprofen, Diflunisal, Fenoprofen calcium, Naproxen, Tolmetin sodium, Indomethacin, Benzonatate, Caramiphen edisylate, Menthol, Dextromethorphan hydrobromide, Theobromine hydrochloride, Chlophendianol Hydrochloride, Pseudoephedrine Hydrochloride, Phenylephrine, Phenylpropanolamine, Pseudoephedrine sulphate, Brompheniramine maleate, Chlorpheniramine- maleate, Carbinoxamine maleate, Clemastine fumarate, Dexchlorpheniramine maleate, Dephenhydramine hydrochloride, Diphenpyralide hydrochloride, Azatadine maleate, Diphenhydramine citrate, Doxylamine succinate, Promethazine hydrochloride, Pyrilamine maleate, Tripellenamine citrate, Triprolidine hydrochloride, Acrivastine, Loratadine, Brompheniramine, Dexbrompheniamine, Guaifenesin, Ipecac, Potassium iodide, Terpin hydrate, Loperamide, Famotidine, Ranitidine, Omeprazole, Lansoprazole, Aliphatic alcohols, Barbiturates, Caffeine, Nicotine, Strychnine, Picrotoxin, Pentyenetetrazol, Phenyhydantoin, Phenobarbital, Primidone, Carbamazapine, Etoxsuximide, Methsuximide, Phensuximide, Trimethadione, Diazepam, Benzodiazepines, Phenacemide, Pheneturide, Acetazolamide, Sulthiame, Bromide, Levodopa, Amantadine, Morphine, Heroin, Hydromorphone, Metopon, Oxymorphone, Levophanol, Codeine, Hydrocodone, Xycodone, Nalorphine, Naloxone, Naltrexone, Salicylates, Phenylbutazone, Indomethacin, Phenacetin, Chlorpromazine, Methotrimeprazine, Haloperidol, Clozapine, Reserpine, Imipramine, Tranylcypromine, Phenelzine, Lithium, Sildenafil citrate, Tadalafil, and Vardenafil CL.

Furthermore, examples of useful active ingredients include active ingredients selected from the groups of ace-inhibitors, antianginal drugs, anti- arrhythmias, anti-asthmatics, anti-cholesterolemics, analgesics, anesthetics, anticonvulsants, antidepressants, anti-diabetic agents, anti-diarrhea preparations, antidotes, anti-histamines, anti-hypertensive drugs, anti-inflammatory agents, anti-lipid agents, anti-manics, anti-nauseants, anti-stroke agents, anti-thyroid preparations, anti-tumor drugs, anti- viral agents, acne drugs, alkaloids, amino acid preparations, anti-tussives, anti- uricemic drugs, anti- viral drugs, anabolic preparations, systemic and non-systemic anti- infective agents, anti-neoplasties, antiparkinsonian agents, anti-rheumatic agents, appetite stimulants, biological response modifiers, blood modifiers, bone metabolism regulators, cardiovascular agents, central nervous system stimulates, cholinesterase inhibitors, contraceptives, decongestants, dietary supplements, dopamine receptor agonists, .endometriosis management agents, enzymes, erectile dysfunction therapies such as sildenafil citrate, which is currently marketed as Viagra™, fertility agents, gastrointestinal agents, homeopathic remedies, hormones, hypercalcemia and hypocalcemia management agents, immunomodulators, immunosuppressives, migraine preparations, motion sickness treatments, muscle relaxants, obesity management agents, osteoporosis preparations, oxytocics, parasympatholytics, parasympathomimetics, prostaglandins, psychotherapeutic agents, respiratory agents, sedatives, smoking cessation aids such as bromocriptine or nicotine, sympatholytics, tremor preparations, urinary tract agents, vasodilators, laxatives, antacids, ion exchange resins, anti-pyretics, appetite suppressants, expectorants, anti-anxiety agents, anti-ulcer agents, antiinflammatory substances, coronary dilators, cerebral dilators, peripheral vasodilators, psycho-tropics, stimulants, anti-hypertensive drugs, vasoconstrictors, migraine treatments, antibiotics, tranquilizers, anti-psychotics, anti-tumor drugs, anti-coagulants, antithrombotic drugs, hypnotics, anti-emetics, anti-nauseants, anti-convulsants, neuromuscular drugs, hyper- and hypo-glycemic agents, thyroid and anti-thyroid preparations, diuretics, anti-spasmodics, terine relaxants, anti-obesity drugs, erythropoietic drugs, anti-asthmatics, cough suppressants, mucolytics, DNA and genetic modifying drugs, and combinations thereof.

In some embodiments, a delivery system may be applied in the chewing gum according to the invention in order to control the release of one or more ingredients. The delivery system is prepared by partially or completely encapsulating one or more ingredients with an encapsulating material (e.g., water insoluble polymer or copolymer). Examples of ingredients, which may be encapsulated include flavours, flavour potentiators, acids, mouth moisteners, colours, cooling agents, warming agents, sensates, actives, vitamins or other micronutrients, high intensity sweeteners, emulsifiers or surfactants, taste masking agents, dental care actives, breath freshening actives, minerals, cooling potentiators, warming potentiators, sweetness potentiators, throat soothing agents, mouth moistening agents, remineralization agents, demineralization agents, antibacterial agents, antimicrobial agents, anticalculus agents, bitterness masking agents, and other of the active ingredients mentioned above.

In some embodiments, a delivery system or a chewing gum that includes the delivery system as a component may include one or more ingredients, amounts of one or more ingredients, or ratios of two or more ingredients, etc., such that the release rate or release profile of one or more of these ingredients, or another ingredient in the delivery system or chewing gum, is managed during consumption or other use of the delivery system or chewing gum.

As used herein, the term "delivery system" includes an encapsulating material and at least one ingredient encapsulated with the encapsulating material. In some embodiments, a delivery system may include multiple ingredients, multiples layers or levels of encapsulation, and/or one or more other additives. A delivery system may be an ingredient or component in a chewing gum composition. In some embodiments, the one or more ingredients and an encapsulating material in the delivery system may form a matrix. In some embodiments, the encapsulating material may completely coat or cover the one or more ingredients or form a partial or complete shell, cover, or coating around the one or more ingredients.

Materials to be used for the above-mentioned encapsulation methods might e.g. include Gelatine, Wheat protein, Soya protein, Sodium caseinate, Caseine, Gum arabic, Mod. starch, Hydrolyzed starches (maltodextrines), Alginates, Pectin, Carregeenan, Xanthan gum, Locus bean gum, Chitosan, Bees wax, Candelilla wax, Carnauba wax, Hydrogenated vegetable oils, Zein and/or Sucrose.

Various coating materials may be applied, and the coating types may be selected from hard coatings, soft coatings, film coatings, or coatings of any type that is known in the art, or a combination of such coatings. The coating may typically constitute 10 to 50 percent by weight of a final coated chewing gum piece.

Hard coatings include sugar coatings and sugar-free (or sugarless) coatings and combinations thereof. It is an advantage to apply a hard coating, when a sweet, crunchy layer is desired as the initial sensation by the consumer of the filled chewing gum piece. Also, a hard coating has the best protective effects, which are typically desired according to the present invention. In a typical process of providing the chewing gum pieces with a protective sugar coating, the gum centers are successively treated in suitable coating equipment with aqueous solutions of crystallisable sugar such as sucrose or dextrose, which, depending on the stage of coating reached, may contain other functional ingredients, e.g. fillers, colors, active ingredients etc.

In the present invention sugarless or sugarfree coating is preferred, and the coating agent may e.g. be a polyol including as examples sorbitol, maltitol, mannitol, xylitol, erythritol, lactitol and isomalt or e.g. a mono- di-saccharide including as example trehalose.

Alternatively a sugarfree soft coating may be applied, e.g. comprising a syrup of a polyol or a mono- di-saccharide, including as examples sorbitol, maltitol, mannitol, xylitol, erythritol, lactitol, isomalt and trehalose.

Furthermore, a film coating may be applied, which comprises film-forming agents such as cellulose derivative, modified starch, dextrin, gelatine, zein, shellec, gum arabic, vegetable gum, synthetic polymer, etc. or a combination thereof.

In general, it may in certain embodiments of the invention be preferred to include at least one additive component in the coating material. Examples of such additive component include binding agents, moisture-absorbing components, film-forming agents, dispersing agents, antisticking components, bulking agents, flavoring agents, coloring agents, active ingredients such as pharmaceutically or cosmetically active substances, lipid components, wax components, and acids.

A chewing gum piece according to the invention may have any form, shape or dimension, preferably that permits the chewing gum piece to be coated using any conventional coating process.

The chewing gum may be manufactured by any known manufacturing procedure known in the art including extrusion methods, batch-wise mixing, tabletting, granulation and compression techniques, and the resulting chewing gum may have any form known in the art including chewing gum tablets, compressed chewing gum tablets, center-filled chewing gum, etc. The outer appearance may for example be a pellet, a cushion-shaped pellet, a tablet, a stick, a slab, a chunk, a pastille, a pill, a ball, and a sphere, and typically the weight of the coated chewing gum piece may be within the range of 0.5 to 15 grams, preferably about 1 to 5 grams.

Chewing gum according to the invention may be manufactured by various processes known in the art.

As a non-limiting example, the gum bases may be prepared as follows: A mixing kettle is preheated for 15 minutes to a temperature of about 60-80°C, and the gum base polymers are added to the mixing kettle provided with mixing means like e.g. horizontally placed Z-shaped arms. The mixture is mixed for 10-20 minutes until the whole mixture becomes homogeneous. The mixture is then discharged into a pan and allowed to cool to room temperature from the discharged temperature of 60-80°C.

As a non-limiting example, the final chewing gum products may for example be prepared as follows: The gum base is added to a mixing kettle provided with mixing means like e.g. horizontally placed Z-shaped arms. If convenient the chewing gum manufacture may proceed in the same mixing kettle as used for the gum base preparation. The kettle may be cooled down to or preheated for to a temperature of about 40-60°C. One large portion of bulk sweetener such as sorbitol or the like may be added together with the gum base and mixed for 3 minutes. Flavor may then be added to the kettle and mixed for 1 minute. A further large portion of bulk sweetener is added and mixed for 1 minute. A further sweetener such as for example maltitol syrup is added, and then filler and wax may be added and the gum mass is mixed well. Softeners are slowly added and mixed for 7 minutes. Then high intensity sweeteners such as aspartame and/or acesulfame are added to the kettle and mixed for 3 minutes. A further sweetener such as e.g. xylitol is added and mixed for 3 minutes. The resulting gum mixture is then discharged and e.g. transferred to a pan at a temperature of 40-48 °C. The gum is then rolled and scored into cores, sticks, balls, cubes, and any other desired shape, optionally followed by coating and polishing processes prior to packaging. Softeners, emulsifiers, fillers and part of the flavoring may alternatively be added during the gum base preparation.

Evidently, within the scope of the invention, other processes and ingredients may be applied in the process of manufacturing the chewing gum, such as e.g. disclosed in US 6,858238, US 2007/0104829, WO/2007/038919, WO/2006/089200. Evidently, the chewing gums may as well be manufactured as compressed chewing gum tablets, such as disclosed in WO/2006/127738, WO/2006/079343, WO/2006/002622, and WO/2005/063038 or as center-filled chewing gum such as disclosed in WO/2006/127481, WO/2006/127307, WO/2006/127277, and WO/2006/079338.

The following non-limiting examples illustrate different chewing gum components and compositions according to the invention.

### EXAMPLE 1

### Preparation of biodegradable resinous polymer with molar ratio of 97% D,L-lactide and 3% ε-caprolactone initiated with 1,2-propane diol

To a dry 100 ml glass round-bottom flask was charged 0.265g Tin(II)-ethylhexanoate (Aldrich 97%), 6.427g 1,2-propanediol (Aldrich 99+%), and 18.627g ε-caprolactone (ACROS 99+%) in a dry, nitrogen purged glove-box. The reactor was immersed into a 130°C preheated silicone oil bath and mechanically stirred for 65 minutes and removed from the oil bath. The polymer was drawn into a dry syringe while still hot and 22.172g was charged into a dry 1000 ml round-bottom flask containing 678.062g D,L-lactide (ORTEC). The flask was immersed into the 130°C preheated silicone oil bath and mechanically stirred for 300 minutes when removed. The flask was immediately removed from the glove-box and completely wrapped with a pre-heated Glas-Col 500 watts/115 volts heating mantle regulated with a Staco Energy Products Type 3 Variable Autotransformer set at 65% of 0-120V output. The heated vessel was inverted allowing the final polymer product to fully discharge from the reactor within approximately 2 minutes into a dry 1-quart metal packaging container.

Characterization of the polymer indicates Tg = 44°C (DSC, heating rate 10°C/min), Mₙ = 11,650 g/mol, and M_{w} = 12,420 g/mol (gel permeation chromatography with online MALLS detector). PD = 1.07.

### Comparative EXAMPLE 2

### Elastomeric polymer

A standard polyisoprene polymer manufactured in a conventional process is provided as an elastomeric polymer.

### EXAMPLE 3

### Biodegradable elastomeric polymer

An elastomer sample is produced using a 500 mL resin kettle equipped with an overhead stirrer, nitrogen gas inlet tube, thermometer, and distillation head for removal of methanol. To the kettle are charged 83.50 g (0.43 mole) dimethyl terephthalate, 99.29 g (0.57 mole) dimethyl adipate, 106.60 g (1.005 mole) di(ethylene glycol) and 0.6 g calcium acetate monohydrate. Under nitrogen, the mixture is slowly heated with stirring until all components become molten (120-140°C). Heating and stirring are continued and methanol is continuously distilled. The temperature slowly rises in the range 150-200°C until the evolution of methanol ceases. Heating is discontinued and the content is allowed to cool to about 100°C. The reactor lid is removed and the molten polymer is carefully poured into a receiving vessel.

Characterization of the polymer indicates Tg = -30°C (DSC, heating rate 10°C/min), Mn = 40,000g/mol and Mw = 190,000g/mol (gel permeation chromatography with online MALLS detector).

### EXAMPLE 4

A homopolymer by NatureWorks^{®} PLA 4060 D (amorph) poly D,L-lactide is provided as a resin. The homopolymer has a Tg of about 56°C. ( Mn ~ 100,000)

### EXAMPLE 5

A homopolymer by NatureWorks^{®} PLA 5500 D (amorph) poly D,L-lactide is provided as a resin. The homopolymer has a Tg of about 50°C (Mn ~ 50,000)

### EXAMPLE 6

A polymer of example 1 is used as backbone in the production of a low tack polymer by having side chains comprising poly (ethylene glycol) attached thereto.

### Comparative EXAMPLE 7

A polyvinyl acetate polymer is used as backbone in the production of a low tack polymer by having side chains comprising poly (ethylene glycol) attached thereto.

### Comparative EXAMPLE 8

A polymer of example 2 is used as backbone in the production of a low tack polymer by having side chains comprising poly (ethylene glycol) attached thereto.

### EXAMPLE 9

A polymer of example 3 is used as backbone in the production of a low tack polymer by having side chains comprising poly (ethylene glycol) attached thereto.

### EXAMPLE 10

A polymer of example 4 is used as backbone in the production of a low tack polymer by having side chains comprising poly (ethylene glycol) attached thereto.

### EXAMPLE 11

A polymer of example 5 is used as backbone in the production of a low tack polymer by having side chains comprising poly (ethylene glycol) attached thereto.

### EXAMPLE 12

### Gum bases and chewing gums

For the purpose of obtaining chewing gums possessing low-tack and biodegradability, different gum bases may be manufactured. Examples of compositions are outlined in table 1.

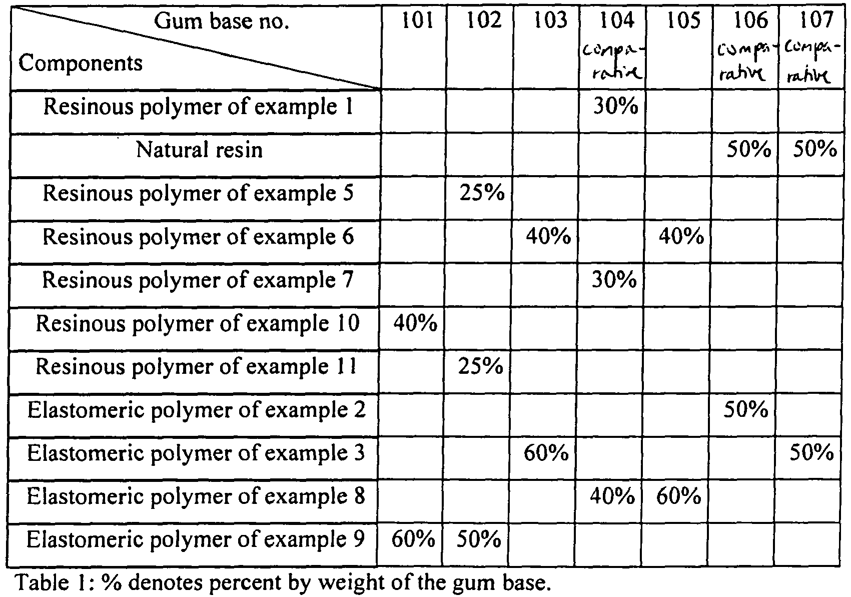

The gum bases no. 101-107 may be applied in the same overall chewing gum formulation in order to obtain chewing gums comparable with respect to their gum base composition. An example of a suitable chewing gum formulation is given in table 2. Gum bases no. 101-107 may be applied to obtain chewing gums no. 1001-1007, respectively (gum base 101 in chewing gum 1001 etc).

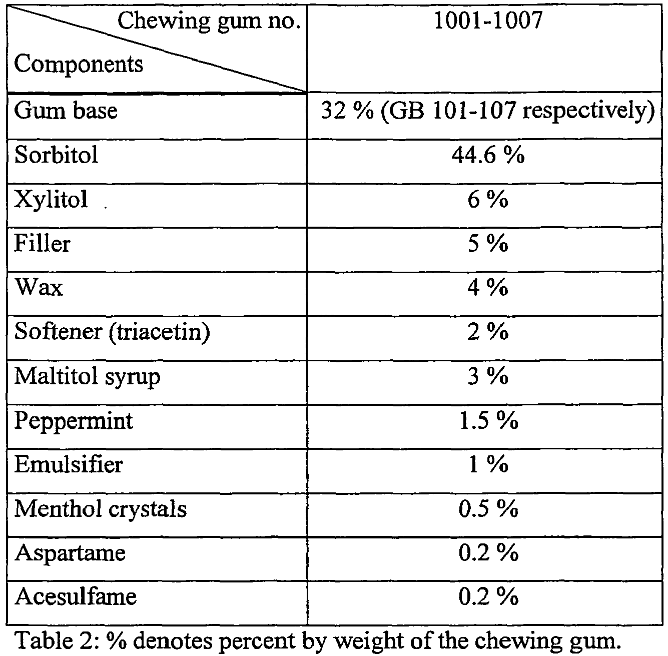

### EXAMPLE 13

### Evaluation of tackiness of chewing gums

Chewing gums 1001-1005 of example 12 are considered acceptable with acceptable low-tack properties, as improved low tack is obtained by a synergy between low tack effected by side chains attached to the backbone of some gum base polymers and biodegradability of some gum base polymers. Chewing gums no. 1006 and 1007 are not considered acceptable with regard to tackiness.

### EXAMPLE 14

### Evaluation of degradability of chewing gums

Chewing gums 1001-1003 of example 12 are considered acceptable with acceptable degradability properties, while the conventional chewing gum 1006 is not acceptable with regard to degradability.

## Claims

1. Environmental chewing gum composition comprising at least one biodegradable gum base polymer, at least one sweetener and at least one flavor, said composition having low tack effected by a plurality of side chains attached to the backbone of at least one gum base polymer, wherein the backbone of the gum base polymer comprises said biodegradable gum base polymer, wherein the biodegradable gum base polymer is hydrolytically degradable,
wherein at least one of the gum base polymers is a graft copolymer, and wherein said graft copolymer comprises a plurality of side chains attached to the backbone, wherein the biodegradable polymer is selected from the group consisting of polyesters, polycarbonates, polyesteramides, polyesterurethanes, or any combination thereof.

2. Chewing gum composition according to claim 1, wherein the plurality of side chains is more hydrophilic than the backbone of the gum base polymer.

3. Chewing gum composition according to claim 1 or 2, wherein the gum base polymer comprising the plurality of side chains forms an amphiphilic molecular structure.

4. Chewing gum composition according to any of the claims 1-3, wherein the side chains are directly attached to carbon atoms of the backbone of the gum base polymer or the side chains are attached via -C(O)O- groups and/or via -C-C(O)O-groups to the backbone of the gum base polymer.

5. Chewing gum composition according to any of the claims 1-4, wherein the side chains comprise alkylene oxide groups, poly alkylene oxide monomers, poly ethylene glycol, an acrylate ester of a poly alkylene glycol, and/or a methacrylate ester of a poly alkylene glycol.

6. Chewing gum composition according to any of the claims 1-5, wherein the number of side chains attached to the backbone of the gum base polymer is at least 2, such as at least 3, at least 4, or at least 5.

7. Chewing gum composition according to any of the claims 1-6, wherein said chewing gum composition has a total content of gum base polymers comprising in the range of 5% to 90%, preferably 15% to 70% by weight of said chewing gum composition.

8. Chewing gum composition according to any of the claims 1-7, wherein the at least one gum base polymer comprising said backbone and said plurality of side chains comprises at least 5%, preferably at least 10%, and most preferably at least 20% by weight of said total content of gum base polymers.

9. Chewing gum composition according to any of the claims 1-8, wherein all of said gum base polymers are biodegradable.

10. Chewing gum composition according to any of the claims 1-9, wherein the plurality of side chains is grafted to the backbone of the gum base polymer.

11. Method of manufacturing a chewing gum composition according to any of the claims 1-10 comprising the step of providing said gum base polymer including the steps of providing said backbone and grafting said side chains to said backbone.

## Patentansprüche

1. Umweltgerechte Kaugummizusammensetzung, umfassend mindestens ein biologisch abbaubares Gummigrundlage-Polymer, mindestens ein Süßungsmittel und mindestens einen Geschmacks- oder Aromastoff, wobei die Zusammensetzung geringe Klebrigkeit, welche dadurch bewirkt wird, dass eine Mehrzahl von Seitenketten an die Hauptkette von mindestens einem Gummigrundlage-Polymer angeheftet ist, aufweist, wobei die Hauptkette des Gummigrundlage-Polymers das biologisch abbaubare Gummigrundlage-Polymer umfasst, wobei das biologisch abbaubare Gummigrundlage-Polymer hydrolytisch abbaubar ist,
wobei mindestens eines der Gummigrundlage-Polymere ein Pfropfcopolymer ist und wobei das Pfropfcopolymer eine Mehrzahl von Seitenketten angeheftet an die Hauptkette umfasst, wobei das biologisch abbaubare Polymer aus der Gruppe bestehend aus Polyestern, Polycarbonaten, Polyesteramiden, Polyesterurethanen oder einer jeglichen Kombination davon ausgewählt ist.

2. Kaugummizusammensetzung nach Anspruch 1, wobei die Mehrzahl von Seitenketten hydrophiler als die Hauptkette des Gummigrundlage-Polymers ist.

3. Kaugummizusammensetzung nach Anspruch 1 oder 2, wobei das Gummigrundlage-Polymer, welches die Mehrzahl von Seitenketten umfasst, eine amphiphile molekulare Struktur bildet.

4. Kaugummizusammensetzung nach einem der Ansprüche 1-3, wobei die Seitenketten direkt an Kohlenstoffatome der Hauptkette des Gummigrundlage-Polymers angeheftet sind oder die Seitenketten über -C(O)O- Gruppen und/oder über -C-C(O)O- Gruppen an die Hauptkette des Gummigrundlage-Polymers angeheftet sind.

5. Kaugummizusammensetzung nach einem der Ansprüche 1-4, wobei die Seitenketten Alkylenoxidgruppen, Polyalkylenoxidmonomere, Polyethylenglycol, einen Acrylatester eines Polyalkylenglycols und/oder einen Methacrylatester eines Polyalkylenglycols umfassen.

6. Kaugummizusammensetzung nach einem der Ansprüche 1-5, wobei die Anzahl von Seitenketten, die an die Hauptkette des Gummigrundlage-Polymers angeheftet sind, mindestens 2, wie mindestens 3, mindestens 4 oder mindestens 5 beträgt.

7. Kaugummizusammensetzung nach einem der Ansprüche 1-6, wobei die Kaugummizusammensetzung einen Gesamtgehalt an Gummigrundlage-Polymeren aufweist, der im Bereich von 5 Gew.-% bis 90 Gew.-% eingeschlossen, vorzugsweise 15 Gew.-% bis 70 Gew.-% der Kaugummizusammensetzung liegt.

8. Kaugummizusammensetzung nach einem der Ansprüche 1-7, wobei das mindestens eine Gummigrundlage-Polymer, welches die Hauptkette und die Mehrzahl von Seitenketten umfasst, mindestens 5 Gew.-%, vorzugsweise mindestens 10 Gew.-% und am meisten bevorzugt mindestens 20 Gew.-% des Gesamtgehalts an Gummigrundlage-Polymeren umfasst.

9. Kaugummizusammensetzung nach einem der Ansprüche 1-8, wobei die Gesamtheit der Gummigrundlage-Polymere biologisch abbaubar ist.

10. Kaugummizusammensetzung nach einem der Ansprüche 1-9, wobei die Mehrzahl von Seitenketten auf die Hauptkette des Gummigrundlage-Polymers aufgepfropft ist.

11. Verfahren zum Herstellen einer Kaugummizusammensetzung nach einem der Ansprüche 1-10, welches den Schritt umfasst, das Gummigrundlage-Polymer bereitzustellen, einschließlich der Schritte, die Hauptkette bereitzustellen und die Seitenketten auf die Hauptkette aufzupfropfen.

## Revendications

1. Composition de gomme à mâcher environnementale comprenant au moins un polymère de base de gomme biodégradable, au moins un édulcorant et au moins un arôme, ladite composition ayant une faible pégosité réalisée par une pluralité de chaînes latérales liées au squelette d'au moins un polymère de base de gomme, où le squelette du polymère de base de gomme comprend ledit polymère de base de gomme biodégradable, où le polymère de base de gomme biodégradable est dégradable par hydrolyse,
où au moins l'un des polymères de base de gomme est un copolymère greffé, et où ledit copolymère greffé comprend une pluralité de chaînes latérales liées au squelette,
où le polymère biodégradable est choisi dans le groupe consistant en les polyesters, les polycarbonates, les polyesteramides, les polyesteruréthanes ou toute combinaison de ceux-ci.

2. Composition de gomme à mâcher selon la revendication 1 où la pluralité de chaînes latérales est plus hydrophile que le squelette du polymère de base de gomme.

3. Composition de gomme à mâcher selon la revendication 1 ou 2 où le polymère de base de gomme comprenant la pluralité de chaînes latérales forme une structure moléculaire amphiphile.

4. Composition de gomme à mâcher selon l'une quelconque des revendications 1-3 où les chaînes latérales sont liées directement à des atomes de carbone du squelette du polymère de base de gomme ou bien les chaînes latérales sont liées via des groupes -C(O)O- et/ou via des groupes -C-C(O)O- au squelette du polymère de base de gomme.

5. Composition de gomme à mâcher selon l'une quelconque des revendications 1-4 où les chaînes latérales comprennent des groupes oxyde d'alkylène, des monomères de polyoxyde d'alkylène, du polyéthylèneglycol, un ester acrylate d'un polyalkylèneglycol et/ou un ester méthacrylate d'un polyalkylèneglycol.

6. Composition de gomme à mâcher selon l'une quelconque des revendications 1-5 où le nombre de chaînes latérales liées au squelette du polymère de base de gomme est au moins 2, comme au moins 3, au moins 4 ou au moins 5.

7. Composition de gomme à mâcher selon l'une quelconque des revendications 1-6 où ladite composition de gomme à mâcher a une teneur totale de polymères de base de gomme comprenant dans la plage de 5 % à 90 %, de préférence 15 % à 70 % en poids de ladite composition de gomme à mâcher.

8. Composition de gomme à mâcher selon l'une quelconque des revendications 1-7 où le au moins un polymère de base de gomme comprenant ledit squelette et ladite pluralité de chaînes latérales comprend au moins 5 %, de préférence au moins 10 % et de manière particulièrement préférable au moins 20 % en poids de ladite teneur totale de polymères de base de gomme.

9. Composition de gomme à mâcher selon l'une quelconque des revendications 1-8 où tous lesdits polymères de base de gomme sont biodégradables.

10. Composition de gomme à mâcher selon l'une quelconque des revendications 1-9 où la pluralité de chaînes latérales est greffée au squelette du polymère de base de gomme.

11. Procédé de fabrication d'une composition de gomme à mâcher selon l'une quelconque des revendications 1-10 comprenant l'étape de fourniture dudit polymère de base de gomme incluant les étapes de fourniture dudit squelette et de greffage desdites chaînes latérales audit squelette.
